# EUROPÄISCHE PATENTSCHRIFT

(11) **EP 2 882 873 B1**
(45) Veröffentlichungstag und Bekanntmachung des Hinweises auf die Patenterteilung: **14.08.2019**
(21) Anmeldenummer: 13737130.8
(22) Anmeldetag: 20.06.2013
(51) Int. Cl.: C21C 5/30, C21C 5/35, F27B 3/22, F27D 19/00, C21C 5/46, C21C 7/00

(54) **VERFAHREN ZUM BETRIEB EINES REAKTIONSGEFÄSSES ZUR STAHLHERSTELLUNG, SOWIE STAHLKONVERTERANORDNUNG SELBST**
METHOD FOR OPERATING A REACTION VESSEL FOR STEEL PRODUCTION, AND A STEEL CONVERTER ARRANGEMENT ITSELF
PROCÉDÉ DE FONCTIONNEMENT D'UN RÉACTEUR POUR LA PRODUCTION D'ACIER ET ENSEMBLE CONVERTISSEUR D'ACIÉRIE EN LUI-MÊME

(30) Priorität: 08.08.2012 DE 102012016074
(43) Veröffentlichungstag der Anmeldung: 17.06.2015
(73) Patentinhaber: Primetals Technologies Austria GmbH, 4031 Linz (AT)
(72) Erfinder: GÜNTHER, Christian, 66763 Dillingen (DE)
(74) Vertreter: Metals@Linz
(86) Internationale Anmeldenummer: PCT/EP2013/001823
(87) Internationale Veröffentlichungsnummer: WO 2014/023370

(56) Entgegenhaltungen:
- EP-A2- 0 257 450
- WO-A1-97/46717
- WO-A1-2005/001147
- DE-A1- 4 343 957
- DE-C1- 19 521 518
- US-A- 4 207 094

## Beschreibung

Die Erfindung betrifft ein Verfahren zum Betrieb eines Reaktionsgefäßes zur Stahlherstellung bei dem Sauerstoff, oder sauerstoffhaltige Gase sowohl von unten in das Schmelzbad eingeblasen, als auch von oben als vorgeheizter Heißwind auf das Schmelzbad mit einer Heißwindlanze geblasen wird, wobei der Heißwindlanze über eine Heißwindleitung mit einer Heißwindquelle verbunden ist, sowie Stahlkonverteranordnung selbst, gemäß Oberbegriff der Patentansprüche 1 und 9.

Bei der Stahlherstellung in Reaktionsgefäßen, wie bspw in Konvertern wird sowohl Roheisen als auch Schrott als Einsatzmaterial verwendet. Zusätzlich kann aber auch im Direktreduktionsverfahren hergestellter sogenannter Eisenschwamm in Form von DRI (Direct Reduced Iron) oder HBI (Hot Briquetted Iron) eingesetzt werden. Ein Beispiel hierfür ist aus der EP 1 920 075 B1 bekannt.

Aus der EP 0 257 450 A2 ist ein oberbegriffliches Verfahren bekannt, bei dem der Eintrag von Heißwind einen indrekten thermischen Beitrag auf die Schmelze durch Nachverbrennung liefert. Dabei ist aber keinerlei regelungstechnische Maßnahme zur Steuerung der Materialeinträge angegeben.

Aus der WO 2005/001147 A1 ist ein ähnliches Verfahren bekannt, aber auch hier fehlen besagte regelungstechnische Berücksichtigungen.

Aus der WO 97/46717 A1 wird in bekannter Weise Sauerstoff oder Luft aufgeblasen, wobei aber lediglich der durch die damit bewirkte Nachverbrennung eingebrachte Energiebeitrag berücksichtigt wird.

Ein weiteres Verfahren ist aus der DE 43 43 957 A1 bekannt, bei welchem in der Betriebsphase des Konverters Brennstoffe, Sauerstoff enthaltende Gase und Eisenrohstoffe, auch Schrott eingeführt werden, und die Reaktionsgase oberhalb der Schmelze im Gasraum des Konverters mit oxidierenden Gasen nachverbrannt werden. Die dabei entstehende Wärme wird auf die Schmelze übertragen. Zusätzlich wird über Bodendüsen Sauerstoff und/oder Brennstoffe zugeführt.

Soweit ist die Kombination der bodenseitigen Einblasung Sauerstoff sowie die Aufblasung von Heißwind auf die Schmelze als solche bekannt.

Unter Heißwind wird ein aufgeheiztes sauerstoffhaltiges Gas verstanden. Das Gas ist typischerweise aus den Hauptkomponenten Sauerstoff, Stickstoff und Argon zusammengesetzt. Der Sauerstoffgehalt liegt im Bereich von normaler Luft (21%) und kann durch Anreicherung mit Sauerstoff Gehalte von bis zu 50%, vorzugsweise 35% erreichen. Als Heißwind kann aber auch ein Synthesegas verstanden werden, das bspw. aus den Abgasen einer Verbrennungsreaktion eines Brennstoffs wie zum Beispiel Hochofengas, Koksgas, Konvertergas, Erdgas oder eines gasförmigen oder flüssigen Kohlenwasserstoffs mit Luft gewonnen wird. Der O2-Gehalt des Synthesegases lässt sich durch die Luftzahl der Verbrennung und eine ggfs. gleichzeitige Anreicherung der Verbrennungsluft mit Sauerstoff und/oder der Vermischung der Verbrennungsabgase mit reinem Sauerstoff einstellen. Ein solchermaßen erzeugtes Synthesegas weist neben den o.g. Kompnenten noch zusätzlich Gehalte CO2 und Wasser als Produkte der Verbrennung auf.

Bekanntermaßen wird die Wärmebilanz des chargenweise geführten Konverterprozesses aus der Zieltemperatur beim Abstich bestimmt. Vermöge der Roheisentemperatur und chemischen Zusammensetzung des Roheisens, der Eigenschaften aller weiteren Einsatzstoffe, der im Verlauf der Charge frei gesetzten und verbrauchten Reaktionswärmen sowie der Zielanalyse des Rohstahls bei Abstich wird die Zieltemperatur bei Abstich durch Zugabe einer wohl definierten Menge an Kühlmitteln wie z.B Schrott oder Eisenschwamm anvisiert. Diesen anvisierten Betriebspunkt nennt man den autothermen Punkt des Verfahrens. Ausgehend von einer bestimmten Zieltemperatur und damit von einem eingestellten Verhältnis von Roheisen zu Kühlmittel, verschiebt sich dieser autotherme Punkt, bei ansonsten gleichen Randbedingungen, für höhere Abstichtemperaturen hin zu einer niedrigeren Kühlmittelrate und bei einer niedrigeren Abstichtemperatur hin zu einer höheren Kühlmittelrate.

Wesen dieser autothermen Prozessführung ist, dass die dem Prozess zur Verfügung stehende Gesamtenergie in erster Linie aus der Temperatur und Zusammensetzung des Roheisens definiert ist, dass das Verhältnis von Roheisen zu Kühlmittel durch den autothermen Punkt vorgegeben ist.

Im Gegensatz zu dieser autothermen Prozessführung spricht man von allothermer Prozessführung, wenn man dem Prozess zusätzliche Eneriegeträger in Form von bspw Silizium- oder Aluminiumträgern oder Kohle zuführt. Durch die Zugabe solcher externer Energieträger lässt sich nun das Verhältnis von Roheisen zu Kühlmittel aktiv aus dem autothermen Punkt heraus in Richtung einer geringeren Roheisenrate bzw. höheren Kühlmittelrate verschieben. Für diese Verschiebung muss genau so viel Energie von außen zugegeben werden, wie für das Aufschmelzen des zusätzlichen Schrottes erforderlich ist. In diese Energiebilanz geht ebenfalls ein, zu welchem Anteil die von außen zugeführte Energie auch tatsächlich im Konverterprozess ausgenutzt werden kann.

Aufgrund der vorherrschenden hohen Reaktionstemperaturen sowie der Gegenwart eines kohlenstoffhaltigen Eisenbades, reagiert der im Prozess umgesetzte Kohlenstoff zwar vollständig bis zum Kohlenmonoxid (CO), Kohlendioxid (CO2) entsteht aber nur in geringem Umfang. Dies bedeutet, dass ein großer Teil der sowohl autotherm als auch allotherm für den Gesamtprozess zu Verfügung gestellten Energie in Form von heißem CO das Reaktionsgefäß verlässt. Zwar wird diese Energiemenge nach dem heutigen Stand der Technik aufgefangen und nutzbar gemacht und steht für ausgelagerte Prozesse zur Verfügung. Für den Kernprozess der Stahlherstellung ist dieser Energieanteil aber verloren.

Für einen effizienten Herstellungsprozess muss jedoch die vollständige Energiebilanz, d.h. sowohl die im Frischprozess entstehende Wärme, als auch die als Heißwind eingebrachte Wärme, sowie die Wärmeaufzehrung durch die Zugabe von Schrott (oder einem anderen Kühlmittel) mitberücksichtigt werden.

Ferner ist zu berücksichtigen, dass am Markt die Rohstoffe wie Eisenerze und Kohle von hinreichender Qualität einerseits, sowie Schrott andererseits zeitweise verknappen. Hierbei folgen die Verfügbarkeits- und Preisschwankungen bei Kohle und Erz regelmäßig anderen Zyklen als dies für Schrott der Fall ist.

Daraus entsteht die Bedingung, Stahlerzeugungsprozesse dieser Rohstofflage anzupassen.

Der Erfindung liegt somit die Aufgabe zugrunde, das bekannte Verfahren zur Stahlherstellung aus Roheisen und Schrott im Konverter dahingehend weiter zu entwickeln, dass eine konstant hohe Rohstahlmenge bei reduziertem Roheiseneinsatz erzeugt werden kann.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des Verfahrens sind in den abhängigen Ansprüchen 2 bis 6 angegeben.

Im Hinblick auf eine Konverteranordnung als Reaktionsgefäß ist die gestellte Aufgabe durch die kennzeichnenden Merkmale des Patentanspruches 7 gelöst.

Weitere diesbezügliche Ausgestaltungen sind in den übrigen abhängigen Ansprüchen angegeben.

Kern der verfahrensgemäßen Erfindung besteht darin, dass der Heißwind auf eine Temperatur zwischen 500°C und 1400°C, vorzugsweise 1200°C aufgeheizt und dem Prozess als externer (allotherm-analoger) Wärmebeitrag gesteuert zugegeben wird, womit freiwerdendes Kohlenmonoxid über den Heißwind exotherm effektiver nachverbrannt und die frei werdende Energie auf das Schmelzbad übertragen wird, derart, dass durch den marginalen allotherm-analogen Wärmebeitrag die autotherme Prozessrate in Richtung einer höheren Kühlmittel- bzw Schrottrate verschoben wird.

Es hat sich also herausgestellt, dass man die üblicherweise mit dem Abgas ausgetragene Energiemenge nur in geringem Maße für den Kernprozess nutzbar machen kann, indem man das hoch CO-haltige Prozessgas direkt im Reaktionsgefäß mit reinem Sauerstoff nachverbrennt.

Überraschenderweise wurde daher weiterhin festgestellt, dass sich dieser Energieanteil aus der Nachverbrennung im Reaktionsgefäß genau dann erheblich steigern lässt, wenn für die Nachverbrennung Heißwind verwendet in der verfahrensgemäß beschriebenen Weise verwendet wird.

Dieser Effekt wird beim erfindungsgemäßen Verfahren ausgenutzt und hierdurch ein großer Teil der im Prozessgas enthaltenen Energie für den Kernprozess nutzbar gemacht. Hierdurch verschiebt sich der authotherme Punkt erheblich in Richtung einer höheren Kühlmittelrate. D.h. es kann bspw mehr Schrott eingesetzt werden.

Mit der Erfindung wird also gezielt über einen, gemessen an der im gesamten Prozess erzeugten autothermen Wärme nur marginalen zusätzlichen Wärmeenergiebeitrag eine erhebliche Steigerung des autothermen Wirkungsgrades erzielt. Dieser marginale, in Bezug auf das Reaktionsgefäß von extern zugeführte, und somit als allotherm-analoger Energiebeitrag bezeichneter Wärmebeitrag erhöht dabei die fahrbare Schrott- oder Kühlmittelrate.

In diesem Zusammenhang ist die gesteuerte Beeinflussung der Temperatur und der zugeführten Windmassen durch den Heißwind dabei genau diejenige Stellgröße, mit der die angestrebte Schrott- und/oder Kühlmittelrate gezielt in der oben beschriebenen Weise erhöht wird.

Die Erfindung greift dabei auch die Erkenntnis auf, dass bei Verwendung von Heißwind eine höhere und energetisch effektivere Nachverbrennung erzielt werden kann, als bei der Verwendung von reinem Sauerstoff für die Nachverbrennung. Dies führt dann dazu, dass bei gleichbleibender Stoffbilanz bei der Umwandlung von Roheisen zu Stahl im Reaktionsgefäß, vorzugsweise in einem Konverter, mehr Energie für den eigentlichen Stahlherstellungsprozess zur Verfügung steht. Mit der vorliegenden Erfindung wird erzielt, dass nun ein höherer Anteil des ansonsten im Prozessgas ausgetragenen Kohlenmonoxids im Reaktionsgefäß, also vorzugsweise im Konverter, nachverbrannt und die dabei frei werdende Wärme auf das Schmelzbad übertragen wird. Hierdurch steht eine höhere Energie für den Prozess zur Verfügung. Dies wird in erfindungsgemäßer Weise durch die nur marginale von extern zugeführte Wärmeenergie erzielt, die als allotherm-analoger Wärmebeitrag bezeichnet wird. Aber genau dieser nur marginale Wärmebeitrag verschiebt den autothermen Arbeitspunkt des Prozesses deutlich in Richtung einer höheren Kühlmittelrate. Mit anderen Worten wird durch einen nur kleinen externen Wärmebeitrag der autotherme Arbeitspunkt des Gesamtprozesses ganz erheblich verschoben, indem durch den nur kleinen Wärmebeitrag die Nachverbrennung ganz erheblich effektiver wird.

D.h. die Wärmebilanz im Reaktionsgefäß steigt nicht nur um den Beitrag der externen Wärmezufuhr (allothermanalog), denn dieser ist nur marginal, sondern um einen weit überproportionalen autothermen Wärmebeitrag, und genau dieser wird durch die erfindungsgemäße Betriebsweise der verbesserten Nachverbrennung nunmehr erschlossen.

Im Ergebnis bewirkt eine auf die erfindungsgemäße Weise nur kleine zugeführte Wärmemenge, dass die zur Verfügung stehende Gesamtenergie nun zu einem erheblich höheren Teil für den Konverterprozess selbst und nicht für nachgelagerte Prozesse ausgenutzt wird. Für den Konverterprozess wird hierdurch eine entsprechende Verschiebung des autothermen Punktes hin zu höheren Kühlmittel- und geringeren Roheiseneinsätzen erreicht.

In Bezug auf die in der Gesamtreaktionswärme vorliegende Wärmemenge, lässt sich der Prozess aber durch die genaue Steuerung einer dazu relativ kleinen, und damit gut steuerbaren Initialwärme sehr genau beeinflussen.

Diese genannte zusätzliche autotherme Energiemenge kann dann dazu verwendet werden, dass größere Schrottmengen mit aufgeschmolzen werden können. Auch andere Kühlmittel für die Schmelze sind möglich. Auch kann bspw der Einsatz von Eisenschwamm erhöht werden.

Weiterhin ist es Teil der Erfindung, dass die Heißwindlanze über die Heißwindleitung von einem stationären und kompakt ausgebildeten Pebble Heater gespeist wird, bei dem der erzeugte Heißwind kaltwindseitig mit Sauerstoff angereichert wird. Ein Pebble Heater ist ein intermittierend betriebener Regenerator. Wie bei Regeneratoren üblich, unterscheidet man beim Betrieb von Regeneratoren eine Heiz- und eine Blasphase. Während der Heizphase werden die heißen Abgase aus einer Brennkammer durch einen keramischen Besatz geleitet und übertragen ihre Wärme auf den Besatz . In einer zweiten, sogenannten Blasphase, werden kalte Gase durch den beschriebenen, aufgeheizten Besatz geleitet, nehmen dort die zwischengespeicherte Wärme auf und verlassen den Regenerator als Heißwind. Dieser Heißwind wird dann über die besagte Heißwindleitung der Heißwindlanze zugeführt. Teil der Erfindung ist es auch, dass über die eingeblasene Heißwindmenge über die Einstellung der in den Pebble Heater zugeführten Kaltluftmenge geregelt wird. So ist es möglich den Wärmehaushalt innerhalb des Konverters optimal zu regeln, so dass größere Mengen von Schrott gefahren werden können, die die Schmelze eigentlich tendenziell abkühlen. Durch die Heißwindsteuerung jedoch ist die Schrott- oder Kühlmittelzugäbe nunmehr in erhöhtem Maße möglich. Dies wiederum hat zur Folge, dass das Verfahren wegen des verminderten Roheiseneinsatzes C02 reduziert gefahren werden kann. Ebenso wird durch die Verwendung von Heißwind eine Effizienzsteigerung der Heißwindverbrennung erreicht. Der N-Balast wird extern aufgewärmt, wodurch sich der wärmetechnische Wirkungsgrad der Nachverbrennung im Konverter verbessert.

In vorteilhafter Ausgestaltung ist angegeben, dass der Prozess sich auch bei allothermer Prozessführung mit Einsatz von Kohle als externem Energieträger vorteilhaft führen lässt, indem auch hier die durch die besagte Nachverbrennung des Kohlenmonoxids gewonnene zusätzliche Wärme auf das Schmelzbad übertragen wird, und die zugeführte Kohle besonders effektiv ausgenutzt wird. Durch den gezielten Einsatz der gesteuerten Zufuhr von Heißwind lässt sich die Effektivität der gesamten Verbrennung, bestehend aus der Umsetzung des Kohlenstoffs mit reinem Sauerstoff sowie der Nachverbrennung mit Heißwind optimal einstellen. Dies gilt gleichermaßen für die Umsetzung von im Metallbad gelösten Kohlenstoff wie für den von außen in Form von Kohle zugeführten Kohlenstoff. Da die als externer Brennstoff eingeleitete Kohle in der Regel kalt zugeführt wird, lässt sich die heißwindunterstützte Verbrennung exakt auf die jeweiligen Prozessbedingungen optimieren. Durch die hohe energetische Ausnutzung der eingeleiteten Kohle steht auch betriebssicher die notwendige Wärme zur Verfügung, für die Zufuhr dieser KALTEN Brennstoffe. D.h. auch der im Übrigen durch zugeführte Brennstoffe allotherme Energieanteil wird so effektiver nutzbar.

In alternativer Ausgestaltung ist angegeben, dass alternativ zur Zuführung von Kohle Erdgas zugeführt wird.

Weiterhin ist vorteilhaft angegeben, dass der Prozess auch mit konstanter Kühlmittelmenge gefahren und die erforderliche Energiemenge durch eine variabel nachgeführte Kohlenmenge gesteuert werden kann.

Die Blasposition der Heißwindlanze ist oberhalb des Schmelzbades und innerhalb des Oberkonverters positioniert. Gegenüber einer Position außerhalb des Konverters oberhalb der Konvertermündung kann so, falls erforderlich, die Strahlausbreitung des Heißwindstrahls optimiert werden. Weiterhin wirkt sich eine Position der Lanzenspitze innerhalb des Konverters positiv auf die Abschirmung der Schallemissionen aus, die in erheblichem Umfang an der Mündung der Heißwindlanze entstehen können. Allerdings macht eine Position der Lanzenspitze innerhalb des Konvertergefäßes erforderlich, dass die gesamte Heißwindlanze in Lanzenrichtung verfahrbar ist, damit sich die Lanze soweit zurückziehen lässt, dass sich die Lanzenspitze außerhalb des Konvertergefäßes und insbesondere außerhalb des Drehkreises des Konvertergafäßes befindet. Nur so lässt sich das Konvertergeäß in die zum Chargieren und Entleeren erforderlichen Positionen drehen, ohne die Heißwindlanze zu beschädigen.

Weiterhin ist erforderlich, dass der von oben auf das Schmelzbad aufgeblasene Heißwind über einen direkt am hinteren Ende der Heißwindlanze eingreifenden Heißwindanschluss geführt wird, welcher die feststehende Heißwindleitung mit der in der Einfahrhöhe verfahrbaren Heisswindlanze verbindet.

In vorteilhafter Ausgestaltung ist angegeben, dass die Heißwindlanze mit einer Bewegungsrichtung entlang Ihrer Längsrichtung in den Konverter eingefahren wird, und dass der von oben auf das Schmelzbad aufgeblasene Heißwind über einen direkt am oberen Ende einer Heißwindlanze eingreifenden Heißwindanschluss geführt wird, welcher eine feststehende Heißwindleitung mit der in der Einfahrhöhe variablen Heisswindlanze verbindet.

Alternativ dazu ist es auch möglich, dass die Heißwindlanze mit einer Bewegungsrichtung entlang Ihrer Längrichtung zu einer Position oberhalb der oberen Öffnung des Konverters gefahren wird, und dass der von oben auf das Schmelzbad aufgeblasene Heißwind über einen direkt am oberen Ende einer Heißwindlanze eingreifenden Heißwindanschluss geführt wird, welcher eine feststehende Heißwindleitung mit der in der Einfahrhöhe variablen Heisswindlanze verbindet.

In weiterer vorteilhafter Ausgestaltung ist angegeben, dass die Heißwindlanze insbesondere entlang der Längsachse aus heißwindseitig gemufften Rohrstücken besteht.

Auf diese Weise kann die Heißwindleitung sowie der Heißwindverschluss aber auch die äußere Lanze räumlich festehend sein, während sich die Heißwindlanze im Inneren zur Kompensation der auf der Heißwindseite entstehenden thermischen Ausdehnung ungehindert ausdehnen kann.

In Bezug auf den Stahlkonverter besteht der Kern der Erfindung darin, dass Mittel zur Temperaturerfassung der Heißwindtemperatur im Heißwinderzeuger, und/oder der Heißwindleitung und/oder der Heißwindlanze und/oder der Abstichtemperatur vorgesehen sind, und die durch die Heißwindverbrennung erzielbare zusätzliche Wärmemenge in einer Steuer-/Regeleinrichtung aus der Temperatur ermittelbar und darüber die zugeführte Kühlmittel- oder Schrottmenge über geregelte Schütter in den Konverter direkt oder indirekt steuer- oder regelbar ist, wobei die eingeblasene Heißwindmenge ausschließlich über Stellmittel zur geregelten Zufuhr der in den Pebble Heater zugeführten Kaltluftmenge regelbar ist.

Eine indirekte Steuerung oder Regelung bedeutet hierbei, dass man auch die Temperatur im Konverter indirekt bspw durch Schrottzugabe regeln kann.

Diesbezüglich ist vorteilhaft ausgestaltet, dass über die Kohlezufuhr in das Reaktionsgefäß bzw den Stahlkonverter mengenmäßig regelbar ist.

In weiterer vorteilhafter Ausgestaltung ist vorgesehen, dass die Heißwindlanze entlang der Längsrichtung verfahrbar ist, und dass der von oben auf das Schmelzbad aufgeblasene Heißwind über einen direkt am oberen Ende einer Heißwindlanze eingreifenden Heißwindanschluss geführt wird, welcher eine feststehende Heißwindleitung mit der in Längsrichtung verfahrbaren Heisswindlanze verbindet.

Besonders vorteilhaft ist es, dass die Heißwindlanze aus entlang der Längsachse segmentierten, ineinander greifenen Ausdehnungsmuffen oder -ringen besteht, derart, dass die Heißwindlanze bei steigender Wärmebeaufschlagung eine definierte Längenausdehnung ausführt.

Weiterhin ist vorteilhaft ausgestaltet, dass die Heißwindlanze über eine feststehende Heißwindleitung mit einem stationären Pebble Heater oder jeder anderen Art Regenerator verbunden ist, und dass die Verbindung zwischen Heißwindlanze und Heißwindleitung über einen automatisch lösbaren Heißwindverschluss erfolgt.

Es ist Teil der Erfindung, dass die eingeblasene Heißwindmenge ausschließlich über Stellmittel zur geregelten Zufuhr der in den Pebble Heater zugeführten Kaltluftmenge regelbar ist.

Insgesamt ist anzumerken, dass Heißwind nicht mit Schläuchen heranführbar ist, d.h. es müssen feuerfest ausgekleidete Leitungen verwendet werden. Aus dem Umstand, dass es sich um einen Heißwind-Lanze handelt müssen die auftreteneden Temperaturschwankungen konstruktiv also ganz anders berücksichtigt werden, als bei einer Lanze mit kalten Sauerstoff.

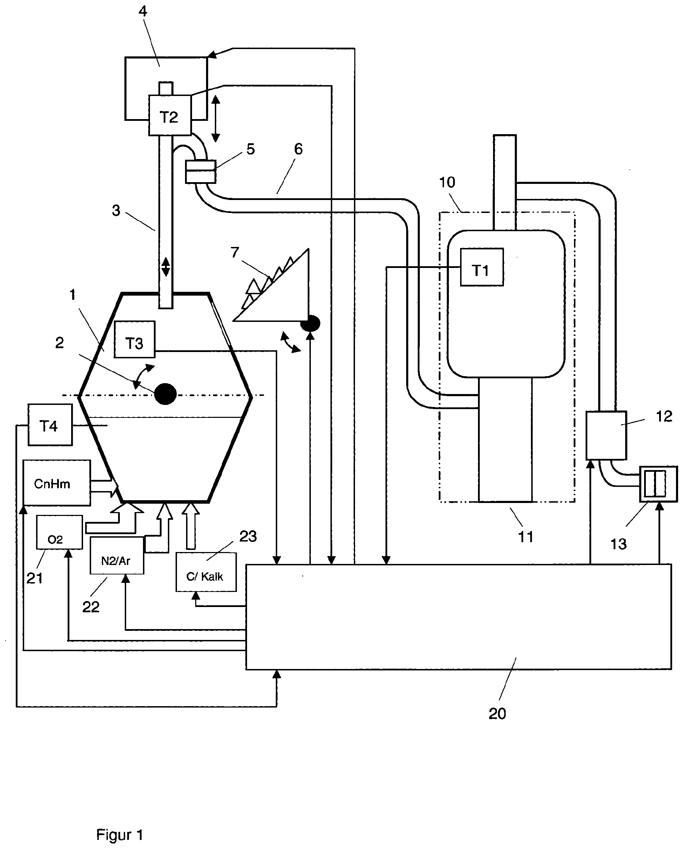

Figur 1 zeigt die wichtigsten Komponenten für die Verfahrensdurchführung in einem funktionalen Zusammenhang. Innerhalb des um die Kippachse 2 kippbaren Konverters 1 befindet sich eine Eisenschmelze. Durch Bodendüsen oder Bodenöffnungen im Konverter 1 werden Sauerstoff, Stickstoff, Argon und Kohlenstoff (Kohle), auch Kalk sowie Kohlenwasserstofe CnHm dem Schmelzbad zugeführt. Die dabei zugesteuerten jeweiligen Mengen werden von einer Steuereinrichtung 20 ermittelt und entsprechende Steuersignale auf die gehörigen Steller 21, 22 und 23 gegeben. Von oberhalb des Schmelzbades wird Heißwind über eine Heißwindlanze 3 in den Konverter 1 geblasen. Die Heißwindlanze 3 ist auf einem Lanzenwagen 4 angeordnet, der ebenfalls von der Steuereinrichtung 20 gesteuert wird. Die Heißwindlanze 3 ist mit einem Heißwindverschluss 5 versehen, welcher durch eine Hubbewegung des Lanzenwagens 4 samt Heißwindlanze 3 von der feststehenden Heißwindleitung 6 getrennt werden kann, bzw durch eine Absenkbewegung mit der Heißwindleitung 6 gasschlüssig verbunden werden kann.

Der Heißwindverschluss ist eine automatisch gesteuerte Einrichtung, mit welcher die gasdichte Verbindung von Heißwindleitung und Heißwindlanze mittels automatischer Kopplungsmittel hergestellt werden kann.

Die Heißwindleitung 6 wird gespeist von einem sogenannten Pebble Heater 10, der in der Blasphase aus Kaltwind Heißwind erzeugt. Der Kaltwind wird in einem Gebläse 13 erzeugt, und kann optional auch zusätzlich mit Sauerstoff angereichert werden.

Die Wärmebilanz im Konverter, und damit auch die über die Heißwindlanze zugeführte Wärme wird dabei vorteilhafterweise ausschließlich über die Zusteuerungsregelung der Kaltluftzufuhr zum Pebble Heater gesteuert bzw geregelt. Genau hierüber erfolgt die Steuerung des zugeführten Heißwindes, und genau darüber wird die Verbrennungsrate und die gesamten allothermen Wärmebeiträge im Reaktionsgefäß bzw im Stahlkonverter optimierend gesteuert.

Wichtig für die Bestimmung der Wärmebilanz des Prozesses ist dabei die Erfassung der Temperatur T1 im Pebble Heater 10, der Temperatur T2 in der Heißwindlanze 3 und/oder direkt der Temperatur T3 im Konverter, über entsprechende Temperaturmessmittel. Ein wesentlicher Beitrag, oder alternativ auch der ausschließliche Beitrag zur Temperaturberücksichtigung, ist die Erfassung der Abstichtemperatur T4, gemessen über entsprechende Temperaturmessmittel, und deren entsprechende Umrechnung und Berücksichtigung in der Gesamtwärmebilanz des Konverterprozesses, die ebenfalls in der Steuereinrichtung erfasst und berechnet wird. Zusätzlich müssen alle eingesetzen Stoffmengen erfasst werden.

Bei allothermer Prozessführung, also mit Zufuhr von externer Energie, vorzugsweise durch das Einleiten von Kohle in das Eisenbad, wird die Prozessführung auch aus der Wärmebilanz der Kohlevergasung beeinflusst. Unter der Kohlevergasung im Konverterprozess versteht man das Einleiten von Kohle (nicht vorgeheizt) in ein kohlenstoffhaltiges Bad von bspw 1.500 °C. Dabei erfolgt eine Umsetzung des eingeleiteten Kohlenstoffs zu Kohlenmonoxid CO, durch die Zuführung von Sauerstoff. Die Einleitung von kalter Kohle in das Eisenbad zehrt erheblich Energiemengen auf, die zum Aufheizen der Kohle, zur Pyrolyse der Kohle und Bindung der Kohleasche in die Prozessschlacke, und zur Lösung des Kohlenstoffs im Eisenbad benötigt wird.

Unterschiedliche Kohlesorten varieren in diesem Energiebeitrag.

So kann bspw abhängig von der Kohlesorte und von der Prozessführung der Energiebedarf für den Kohleumsatz höher sein, als der Energiegewinn aus der Verbrennung des Kohlenstoffs im Eisenbad durch reinen Sauerstoff zu Kohlenmonoxid.

Mit Hilfe der besagten Nachverbrennung, wird die verfügbare Energie um den Nachverbrennungsanteil, also der Weiterverbrennung von CO zu CO2 und ggfs von H zu H2O erhöht. Dies führt dazu, dass, je höher die Nachverbrennunng ist, umso günstiger die Gesamtenergiebilanz aus Kohlevergasung und nachfolgender Nachverbrennung ist.

Dabei ist nunmehr beobachtet worden, dass sich mit steigender Nachverbrennung der bei den höher flüchtigen Kohlen nachteilige hohe Energiebedarf für den Umsatz der Kohle im Eisenbad umkehrt.

Vorteilhaft wirken sich hier insbesondere die aus der Kohle freigesetzten flüchtigen Bestandteile mit hohen Anteilen an Wasserstoff und Kohlenwasserstoffen, die in der Nachverbrennung zusätzliche Energie für den Prozess mit einbringen aus.

Die Konsequenz aus der Wärmebilanz der Kohlevergasung in Verbindung mit der Nachverbrennung ist, dass in einem Eisenbadprozess mit hoher Nachverbrennung Kohle sehr effektiv als zusätzlicher Energieträger eingebracht werden kann.

Man spricht dann von einer allothermen Prozessführung (Einbeziehung externer Energiequellen / -träger).

Die allotherme Prozessführung wird hierbei erfindungsgemäß im Konverterverfahren eingesetzt.

Somit erfolgt die Prozessführung im Konverter über die gesteuerte Zugabe der Einsatzstoffe und zumindest der Erfassung der Abstichtemperatur T4
Bei der allothermen Prozessführung bietet sich im Konverterverfahren auch eine reziproke Prozessführung an, bei welcher der Prozess mit konstanter Kühlmittelrate gefahren wird, wobei fehlende Energieeinträge durch Einleiten der exakt erfolderlichen Kohlemenge eingestellt werden können.

Zusammenfassend lässt sich nun sagen, dass nicht nur im Bezug zur im Stahlbad enthaltenen, sondern auch im Bezug zur durch die Nachverbrennung freigesetzten Enthalpie ist der marginal allothterme Energiebeitrag für die Erwärmung des Heißwindes gering.

Durch diesen vergleichsweise niedrigen Energiebeitrag wird aber erreicht, dass der feuerungstechnische Wirkungsgrad der Nachverbrennung erheblich verbessert wird. Erreicht wird dies dadurch, dass bei vorgewärmter Verbrennungsluft, d.h. Heißwind, die Temperatur der Verbrennungsgase insgesamt angehoben wird. Durch diese höhere Rauchgastemperatur steigt gemäß nulltem Hauptsatz der Thermodynamik der auf das Metallbad (1.500°C) übertragene Anteil an fühlbarer Wärme aus dem Rauchgas.

Kernpunkt des erfindungsgemäß genutzten Effektes ist die mit 1.500 °C sehr hohe Badtemperatur. Durch diesen Bezugspunkt ist es ein großer Unterschied, ob in einem Zweischrittprozess zunächst die Konvertergase und dann Erdgas mit kalter Luft verbrannt werden, oder ob durch die Verbrennung von Erdgas die Verbrennungsluft durch einen Regenerator vorgewärmt wird, und die so erzeugte Heißluft zur Verbrennung der Konvertergase verwendet wird. Im ersten Fall werden zwei im Verhältnis zum Metallbad "kühle" Rauchgasströme erzeugt. Im zweiten Fall ist das Rauchgas aus der Nachverbrennung wesentlich heißer als bei Einsatz von Kaltluft.

### Bezugszeichen

- 1: Stahlkonverter
- 2: Konverterkippeinrichtung
- 3: Heißwindlanze
- 4: Lanzenwagen
- 5: Heißwindverschluß
- 6: Heißwindleitung
- 7: Schrottschütter

- 10: Pebble Heater
- 11: Brennkamer
- 12: Sauerstoffdosierer
- 13: Gebläse

- 20: Steuereinrichtung
- 21: Steller für Sauerstoffbodendüsen
- 22: Steller für Stickstoffbodendüsen
- 23: Steller für Kohlenzufuhr

- T1: Temperaturfühler
- T2: Temperaturfühler
- T3: Temperaturfühler
- T4: Temperaturfühler

## Patentansprüche

1. Verfahren zum Betrieb eines Reaktionsgefäßes (1) zur Stahlherstellung bei dem Sauerstoff, oder sauerstoffhaltige Gase sowohl von unten in das Schmelzbad eingeblasen, als auch von oben als vorgeheizter Heißwind auf das Schmelzbad mit einer Heißwindlanze geblasen wird, wobei die Heißwindlanze (3) über eine Heißwindleitung (6) mit einer Heißwindquelle verbunden ist, **dadurch gekennzeichnet, dass** der Heißwind auf eine Temperatur zwischen 500 und 1400 °C aufgeheizt und dem Prozess als externer, allotherm-analoger Wärmebeitrag gesteuert zugegeben wird, womit freiwerdendes Kohlenmonoxid über den Heißwind exotherm effektiver nachverbrannt und die frei werdende Energie auf das Schmelzbad übertragen wird, derart, dass durch den marginalen allotherm-analogen Wärmebeitrag die autotherme Prozessrate in Bezug auf die Kühlmittel- oder Schrottrate gesteuert wird, durch gesteuerte Zufuhr von Heißwind, und wobei die Heißwindlanze über die Heißwindleitung von einem stationären und kompakt ausgebildeten Regenerator, d.h. einem Pebble Heater (10) gespeist wird, bei dem der erzeugte Heißwind kaltwindseitig mit Sauerstoff angereichert wird und wobei die eingeblasene Heißwindmenge ausschließlich über die Einstellung der in den Pebble Heater zugeführten Kaltluftmenge geregelt wird.

2. Verfahren nach Anspruch 1, **dadurch gekennzeichnet, dass** der Prozess weiterhin noch allotherm begünstigt wird, indem die durch die besagte Nachverbrennung von Prozessgasen, in erster Linie Kohlenmonoxid und Wasserstoff gewonnene zusätzliche Wärme auf das Schmelzbad übertragen wird, und in Bezug auf die zugeführte Kohle als effektive Energiequelle genutzt wird.

3. Verfahren nach Anspruch 2, **dadurch gekennzeichnet, dass** alternativ zur Zuführung von Kohle Erdgas zugeführt wird.

4. Verfahren nach Anspruch 2, **dadurch gekennzeichnet, dass** der Prozess mit konstanter Kühlmittelmenge gefahren und die erforderliche Energiemenge durch eine variabel nachgeführte Kohlenmenge gesteuert wird.

5. Verfahren nach einem der vorhergehenden Ansprüche, **dadurch gekennzeichnet, dass** die Heißwindlanze mit einer Bewegungsrichtung entlang Ihrer Längrichtung in einen Konverter eingefahren wird, und dass der von oben auf das Schmelzbad aufgeblasene Heißwind über einen direkt am oberen Ende einer Heißwindlanze eingreifenden Heißwindanschluss geführt wird, welcher eine feststehende Heißwindleitung mit der in der Einfahrhöhe variablen Heißwindlanze verbindet.

6. Verfahren nach einem der vorhergehenden Ansprüche 1 bis 4, **dadurch gekennzeichnet, dass** die Heißwindlanze mit einer Bewegungsrichtung entlang Ihrer Längrichtung zu einer Position oberhalb der oberen Öffnung eines Konverters gefahren wird, und dass der von oben auf das Schmelzbad aufgeblasene Heißwind über einen direkt am oberen Ende einer Heißwindlanze eingreifenden Heißwindanschluss geführt wird, welcher eine feststehende Heißwindleitung mit der in der Einfahrhöhe variablen Heißwindlanze verbindet.

7. Konverteranordnung zur Durchführung eines Verfahrens nach einem der Ansprüche 1 bis 6, bestehend aus einem Konverter (1) mit Bodeneinblasdüsen, sowie einer auf die Schmelze aufblasenden Heißwindlanze, (3) einer Heißwindleitung (6) und einem Heißwinderzeuger, sowie einer Steuereinrichtung (20) zur Steuerung der Konverteranordnung, **dadurch gekennzeichnet, dass** Mittel zur Temperaturerfassung der Heißwindtemperatur im Heißwinderzeuger, und/oder der Heißwindleitung und/oder der Heißwindlanze und/oder der Abstichtemperatur vorgesehen sind, und die durch die Heißwindverbrennung erzielbare zusätzliche Wärmemenge in einer Steuer- /Regeleinrichtung aus der Temperatur ermittelbar und darüber die zugeführte Kühlmittel- oder Schrottmenge über geregelte Schütter (7) in den Konverter direkt oder indirekt steuer- oder regelbar ist, wobei die eingeblasene Heißwindmenge ausschließlich über Stellmittel zur geregelten Zufuhr der in den Pebble Heater (10) zugeführten Kaltluftmenge regelbar ist.

8. Konverteranordnung nach Anspruch 7, **dadurch gekennzeichnet, dass** über die Kohlezufuhr in das Reaktionsgefäß bzw den Stahlkonverter mengenmäßig regelbar ist.

9. Konverteranordnung nach Anspruch 7 oder 8, **dadurch gekennzeichnet, dass** die Heißwindlanze entlang der Längsrichtung verfahrbar ist, und dass der von oben auf das Schmelzbad aufgeblasene Heißwind über einen direkt am oberen Ende einer Heißwindlanze eingreifenden Heißwindanschluss geführt wird, welcher eine feststehende Heißwindleitung mit der in Längsrichtung verfahrbaren Heißwindlanze verbindet.

10. Konverteranordnung nach Anspruch 9, **dadurch gekennzeichnet, dass** die Heißwindlanze aus entlang der Längsachse segmentierten, ineinander greifenen Ausdehnungsmuffen oder -ringen besteht, derart, dass die Heißwindlanze bei steigender Wärmebeaufschlagung eine definierte Längenausdehnung ausführt.

11. Konverteranordnung nach einem der Ansprüche 7 bis 10, **dadurch gekennzeichnet, dass** die Heißwindlanze über eine feststehende Heißwindleitung mit einem stationären Pebble Heater verbunden ist, und dass die Verbindung zwischen Heißwindlanze und Heißwindleitung über einen automatisch lösbaren Heißwindverschluss erfolgt.

## Claims

1. Method for operating a reaction vessel (1) for steel production in which oxygen, or oxygen-containing gases, is/are both blown into the molten bath from below and blown onto the molten bath from above as a blast of preheated hot air by a hot-blast lance, wherein the hot-blast lance (3) is connected to a source of hot air by way of a hot-blast pipe (6), **characterized in that** the hot air is heated up to a temperature between 500 and 1400°C and fed to the process in a controlled manner as an external heat input analogous to allothermal heat input, whereby released carbon monoxide is afterburned exothermically more effectively by way of the hot air, and the released energy is transferred to the molten bath in such a way that the autothermal process rate is controlled with respect to the coolant or scrap rate by the marginal heat input analogous to allothermal heat input, by a controlled supply of hot air, and wherein the hot-blast lance is fed by way of the hot-blast pipe from a stationary and compactly formed regenerator, i.e. a pebble heater (10), in which the hot air generated is enriched with oxygen on the cold air side, and wherein the amount of hot air blown in is controlled exclusively by way of the setting of the amount of cold air supplied to the pebble heater.

2. Method according to Claim 1, **characterized in that** the process is also further promoted allothermally **in that** the additional heat obtained by said afterburning of process gases, primarily carbon monoxide and hydrogen, is transferred to the molten bath, and is used as an effective energy source with respect to the coal supplied.

3. Method according to Claim 2, **characterized in that**, as an alternative to supplying coal, natural gas is supplied.

4. Method according to Claim 2, **characterized in that** the process is operated with a constant amount of coolant and the required amount of energy is controlled by a variably replenished amount of coal.

5. Method according to one of the preceding claims, **characterized in that** the hot-blast lance is inserted with a direction of movement along its longitudinal direction into a converter, and **in that** the hot air blown onto the molten bath from above is conducted by way of a hot-air connection which directly engages the upper end of a hot-blast lance and connects a fixed hot-blast pipe to the variably insertable hot-blast lance.

6. Method according to one of the preceding Claims 1 to 4, **characterized in that** the hot-blast lance is moved with a direction of movement along its longitudinal direction to a position above the upper opening of a converter, and **in that** the hot air blown onto the molten bath from above is conducted by way of a hot-air connection which directly engages the upper end of a hot-blast lance and connects a fixed hot-blast pipe to the variably insertable hot-blast lance.

7. Converter arrangement for carrying out a method according to one of Claims 1 to 6, consisting of a converter (1) with bottom blowing-in nozzles, and also a hot-blast lance (3), blowing onto the melt, of a hot-blast pipe (6) and a hot-air generator, and also a control device (20) for controlling the converter arrangement, **characterized in that** means for recording the temperature of the hot air in the hot-air generator, and/or the hot-blast pipe and/or the hot-blast lance and/or the tapping temperature are provided, and the additional amount of heat that can be achieved by the combustion of the hot air can be determined in an open-loop/closed-loop control device from the temperature and on this basis the supplied amount of coolant or scrap can be directly or indirectly controlled in an open-loop or closed-loop manner by way of controlled chargers (7) into the converter, wherein the amount of hot air blown in can be controlled exclusively by way of setting means for the controlled supply of the amount of cold air supplied to the pebble heater (10).

8. Converter arrangement according to Claim 7, **characterized in that** the supply of coal to the reaction vessel or the steel converter can be controlled in terms of the amount.

9. Converter arrangement according to Claim 7 or 8, **characterized in that** the hot-blast lance can be moved along the longitudinal direction, and **in that** the hot air blown onto the molten bath from above is conducted by way of a hot-air connection which directly engages the upper end of a hot-blast lance and connects a fixed hot-blast pipe to the longitudinally movable hot-blast lance.

10. Converter arrangement according to Claim 9, **characterized in that** the hot-blast lance consists of expansion sleeves or rings segmented along the longitudinal axis and engaging in one another, in such a way that, when it is exposed to increasing heat, the hot-blast lance undergoes a defined linear extension.

11. Converter arrangement according to one of Claims 7 to 10, **characterized in that** the hot-blast lance is connected by way of a fixed hot-blast pipe to a stationary pebble heater, and **in that** the connection between the hot-blast lance and the hot-blast pipe takes place way of an automatically releasable hot hot-air closure.

## Revendications

1. Procédé pour le fonctionnement d'un récipient de réaction (1) destiné à la production d'acier, dans lequel on introduit par soufflage de l'oxygène ou des gaz contenant de l'oxygène, aussi bien à partir du bas dans le bain de fusion qu'à partir du haut sous la forme d'un vent chaud préchauffé sur le bain de fusion avec une lance pour vent chaud ; dans lequel la lance pour vent chaud (3) est reliée via un conduit pour vent chaud (6) à une source de vent chaud ; **caractérisé en ce que** le vent chaud est chauffé à une température entre 500 et 1400°C et est ajouté au processus d'une manière réglée, sous la forme d'un apport de chaleur externe analogue à un apport allothermique, d'une manière telle que le monoxyde de carbone qui se libère est soumis à une combustion ultérieure plus efficace par voie exothermique via le vent chaud et l'énergie qui se libère est transférée sur le bain de fusion ; **en ce que**, via l'apport marginal de chaleur analogue à un apport allothermique, le rendement autothermique du processus est contrôlé en ce qui concerne le débit du fluide de refroidissement ou des débris métalliques via un apport contrôlé de vent chaud ; et dans lequel la lance pour vent chaud est alimentée via le conduit pour vent chaud d'un régénérateur stationnaire et de structure compacte, c'est-à-dire d'un régénérateur du type Pebble Heater (10) ; dans lequel le vent chaud obtenu est enrichi avec de l'oxygène du côté du vent froid ; et dans lequel la quantité de vent chaud introduite par soufflage est régulée de manière exclusive via le réglage de la quantité d'air froid alimentée dans le Pebble Heater.

2. Procédé selon la revendication 1, **caractérisé en ce que** le processus est en outre également favorisé du point de vue allothermique par le fait que, via ladite combustion ultérieure des gaz du processus, en première ligne du monoxyde de carbone et de l'hydrogène, de la chaleur supplémentaire obtenue est transférée sur le bain de fusion, et est utilisée sous la forme d'une source d'énergie efficace par rapport au charbon alimenté.

3. Procédé selon la revendication 2, **caractérisé en ce que**, en variante par rapport à l'alimentation de charbon, on alimente du gaz naturel.

4. Procédé selon la revendication 2, **caractérisé en ce que** le processus est mis en oeuvre avec une quantité constante de fluide de refroidissement et la quantité d'énergie requise est contrôlée via une quantité de charbon réalimentée de manière variable.

5. Procédé selon l'une quelconque des revendications précédentes, **caractérisé en ce que** la lance pour vent chaud est introduite dans un convertisseur avec une direction de déplacement le long de sa direction longitudinale ; et **en ce que** le vent chaud appliqué à partir du haut par soufflage sur le bain de fusion est guidé via un raccord pour vent chaud qui vient se mettre en prise de manière directe sur l'extrémité supérieure d'une lance pour vent chaud, le raccord en question reliant un conduit fixe pour vent chaud à la lance variable pour vent chaud à la hauteur de son introduction.

6. Procédé selon l'une quelconque des revendications 1 à 4, **caractérisé en ce que** la lance pour vent chaud est entraînée avec une direction de déplacement le long de sa direction longitudinale jusqu'à une position située au-dessus de l'ouverture supérieure d'un convertisseur ; et **en ce que** le vent chaud appliqué par soufflage à partir du haut sur le bain de fusion est guidé via un raccord pour vent chaud qui vient se mettre en prise de manière directe sur l'extrémité supérieure d'une lance pour vent chaud, le raccord en question reliant un conduit fixe pour vent chaud à la lance variable pour vent chaud à la hauteur de son introduction.

7. Agencement de convertisseur pour la mise en oeuvre d'un procédé selon l'une quelconque des revendications 1 à 6, constitué par un convertisseur (1) comprenant des buses d'insufflation à la base, de même qu'une lance pour vent chaud (3) qui souffle sur la masse fondue, un conduit pour vent chaud (6) et un générateur de vent chaud, ainsi qu'un mécanisme de commande (20) pour la commande de l'agencement de convertisseur, **caractérisé en ce qu'**on prévoit des moyens pour l'enregistrement de la température du vent chaud dans le générateur de vent chaud et/ou dans le conduit pour vent chaud et/ou dans la lance pour vent chaud et/ou de la température de coulée, et la quantité de chaleur supplémentaire que l'on peut obtenir via la combustion par vent chaud peut être déterminée dans un mécanisme de commande/réglage à partir de la température et à ce propos, la quantité acheminée du fluide de refroidissement ou des débris métalliques peut être commandée ou réglée de manière directe ou indirecte via des dispositifs d'alimentation réglés (7) dans le convertisseur ; dans lequel la quantité de vent chaud introduite par soufflage peut être réglée de manière exclusive via des moyens de réglage pour l'alimentation réglée de la quantité d'air froid alimenté dans le Pebble Heater (10).

8. Agencement de convertisseur selon la revendication 7, **caractérisé en ce que** l'alimentation en charbon dans le récipient de réaction, respectivement dans le convertisseur d'aciérie, est réglable en ce qui concerne la quantité.

9. Agencement de convertisseur selon la revendication 7 ou 8, **caractérisé en ce que** la lance pour vent chaud peut se déplacer dans la direction longitudinale, et **en ce que** le vent chaud appliqué par soufflage à partir du haut sur le bain de fusion est guidé via un raccord pour vent chaud qui vient se mettre en prise de manière directe sur l'extrémité supérieure d'une lance pour vent chaud, le raccord en question reliant un conduit fixe pour vent chaud à la lance pour vent chaud apte à se déplacer en direction longitudinale.

10. Agencement de convertisseur selon la revendication 9, **caractérisé en ce que** la lance pour vent chaud est constituée par des manchons ou des anneaux d'extension segmentés le long de l'axe longitudinal, venant s'insérer les uns dans les autres, d'une manière telle que la lance pour vent chaud, dans le cas d'une sollicitation croissante de chaleur, réalise une extension longitudinale définie.

11. Agencement de convertisseur selon l'une quelconque des revendications 7 à 10, **caractérisé en ce que** la lance pour vent chaud est reliée via un conduit fixe pour vent chaud à un Pebble Heater stationnaire, et **en ce que** la liaison entre la lance pour vent chaud et le conduit pour vent chaud a lieu via un raccord pour vent chaud qui peut se détacher d'une manière automatique.
